# EUROPEAN PATENT APPLICATION

(11) **EP 4 261 714 A1**
(43) Date of publication of application: **18.10.2023**
(21) Application number: 20964990.4
(22) Date of filing: 09.12.2020
(51) Int. Cl.: G06F 21/16

(54) **METHOD AND SYSTEM FOR ENCODING AND DECODING INFORMATION IN TEXTS**

(71) Applicant: Telefonica Cibersecurity Tech, S.L.U., 28050 Madrid (ES)
(72) Inventor: BIANZINO, Aruna, Prem, 28050 Madrid (ES); DE LOS SANTOS VILCHEZ, Sergio, 28050 Madrid (ES); NÚÑEZ-ROMERO CASADO, Álvaro, 28050 Madrid (ES); SÁNCHEZ, Ricardo, 28050 Madrid (ES)
(74) Representative: Herrero & Asociados, S.L.
(86) International application number: PCT/ES2020/070773
(87) International publication number: WO 2022/123093

(57) **Abstract**

A method of encoding information (10) by using null-sized spaces, ZWSP, from an original text (11), transforming it into a text with hidden information (12), wherein the encoded information (10) is integrated by adding the ZWSP used in encoding. Hidden information encoded in a text ZWSP (120) can contain: Text block number, pre-set block size, text and author metadata, calculated text hash, and a time stamp. A text monitoring system (42) comprising a decoder module (30) that implements the reverse method for decoding information (10) from a received text detecting ZWSP in at least part of the text and extracting the information (10) to obtain the original text (11) using the detected ZWSP. The monitoring system (42) can additionally comprise an encoder module (20) that uses the ZWSPs and be integrated into a remote messaging server (41).

## Description

### OBJECT OF THE INVENTION

The present invention has its application in the telecommunications sector, within the field of digital information security and digital content processing, specifically, in the industry dedicated to the systems for encoding and decoding information embedded in texts. More particularly, the present invention refers to a system and method of encoding/decoding information using null-sized spaces in texts.

### BACKGROUND OF THE INVENTION

Different systems need to embed information in a text, visibly or less, but in such a way that:
- do not alter the appearance of the text itself
- be robust to copy and paste the same text

Zero-size or zero-width spaces (ZWSP: "Zero-width spaces" are characters that are included in digital texts, but are not visible when the text is displayed on a screen or printed. Those characters are present in most standard character sets, including ASCII.

Null-sized spaces are characters that remain in the text even when the text is sent over a communication network, it changes formatting (e.g. from HTML to txt to doc to PDF, etc.), it is copied and pasted, text attributes (bold, italic, etc.), or font, etc. are changed. Therefore, those characters can be used to encode specific information in the text and include it therein, so that it is visible only when specifically searched. This specific information may include, but is not limited to:
- Metadata about the text itself or its author
- Signature of the author of the text
- Text hash
- Secret information that you want to transmit along with the text

When this information is specifically searched in the text, if present, it can be extracted and decoded to return to the original information, following a pre-established and preshared encoding/decoding pattern between the sender and receiver, eventually through another communication channel.

US10534898B2 proposes to include a watermark in text documents, encoding a message that is intended to be embedded in the text in special characters of white space, and replacing those characters for those that were originally in the text itself.

CN110414194A proposes to include a watermark in a text, after each word, including information about the text itself (number of words, etc.) and encoding that information in null-sized spaces.

CN110418029A allows encoding encrypted information in a text, encoding it in the form of null-sized spaces. The information included is secret.

EP3477578A1 describes a solution to hide a message in a text, using alterations in the size of the spaces between words and between letters.

The objective technical problem that arises is to allow, using null-sized spaces, to embed information in a text, about the text itself or not, in an invisible, robust way when copying and pasting the text or only a part thereof, and resistant to transmission over communication networks, changing the format of the file that includes the text, and/or changing the format of the text itself.

### DESCRIPTION OF THE INVENTION

The present invention serves to solve the problem mentioned above, by means of a method of encoding information to protect texts in a hidden way using null-sized white spaces (ZWSP) of the text. The original text can be a digital or digitized document (a digitized document is a scan/image of a digital document previously printed on paper, or conversion to a different digital format from a digital document), including text documents, both in vector format and pixel mapping objects. In addition, the reverse method is provided, that is, the method of decoding the text with hidden information, without requiring the original text.

Text that including hidden information is not distinguishable from observation versus the original text. The information can be repeated throughout the document several times, at various points in the text (for example, after each piece of text), or replicated depending on the piece of text itself (for example, a text string resulting from a hash function, to add robustness to the solution (for example, only part of the original text is sent/copied and pasted/reused/etc.).

The present invention is applicable to:
- Avoid fictitious identities in a messaging system. This solution can thus be integrated into a messaging system (for example, instant messaging) encoding in each message the signature of its author.
- Sending hidden requests for help, for example, to avoid harassment. This function of the invention can also be integrated into an instant messaging system, for example.
- Verify the integrity of a text. In this case, a hash string of the text is encoded.
- Prevent unauthorized copies of text or tracking thereof. In this case, the signature of the author of the text is encoded.
- Include metadata of the text, author, version, etc.
- Transmission of secret information through public/open channels (e.g. exfiltration).

One aspect of the invention relates to a method of encoding information in texts comprising the following steps:
- obtaining the information, manually or automatically, and encoding it using null-sized spaces available in the original text,
- determining at least one part of the original text to integrate the encoded information into that particular (determined) part, adding the null-sized spaces used for encoding, thus transforming the original text into a text with hidden information.

Another aspect of the invention refers to a method of decoding information in texts, complementary to the encoding described above, comprising the following steps:
- identifying, detecting null-sized spaces, at least part of the received text containing the information to decode,
- decoding it using the detected null-sized spaces and extracting the decoded information from the received text to get the original text.

Another additional aspect of the present invention relates to a computer program, which contains instructions or computer code (stored on a non-transient computer-readable medium) for causing processing means (of a computer processor) to perform the steps of the methods of encoding/decoding information in texts described above.

Another last aspect of the invention relates to a text monitoring system comprising modules that can be implemented in one or more computer processors for encoding and decoding information in texts.

The advantages of the present invention compared to the previous state of the art and in relation to the existing systems are fundamentally:
- The present invention guarantees:
   ▪ Robustness to the partial copy of the text
   ▪ Identification of the author of the text
   ▪ Guarantee of the integrity of the text
   ▪ Invisibility to human inspection of the text
   ▪ All of the above, also after changing the format, font and/or style of the text, changing the format of the file, as well as after its transmission over a communication network
- Regarding US10534898B2: In US10534898B2 the message is encoded in white spaces, so the amount of information that can be encoded in that solution depends on the number of white spaces present in the original text. In the present invention, the number of characters that can be included without altering the appearance of the text is unlimited, since they have no visible size.
- Regarding CN110414194A: CN110414194A only uses graphic elements that are not visible within Unicode encoding, includes a watermark in generic text, and does not integrate with other systems, such as an instant messaging system. In CN110414194A the same message is encoded throughout the original text, after each word. The present invention is applicable in instant messaging systems and is flexible because it allows including different messages in different sections of text and/or in different positions.
- Regarding CN110418029A: While, as mentioned above, the present invention is applicable in instant messaging systems, CN110418029A cannot be integrated into other systems, such as an instant messaging system. In addition, CN110418029A only allows secret information to be included in a text.
- Regarding EP3477578A1: EP3477578A1 results in visible variations of the text and these variations only work on visible text but not if the text itself is copied and pasted. On the other hand, these variations remain by printing or making physical copies of a text, while in the present invention that does not happen since it is directed only to digital texts.

These and other advantages are derived from the detailed description of the invention that is described below.

### BRIEF DESCRIPTION OF THE FIGURES

A series of drawings that help to better understand the invention and that are expressly related to an embodiment of said invention that is presented as a nonlimiting example of this, is described below in a very brief way.
FIGURE 1.- It shows a block diagram of a method of encoding information in texts, according to a preferred embodiment of the invention.
FIGURE 2.- It shows a block diagram of the inverse method to the previous one, that is, a method of decoding information in texts, according to a preferential embodiment of the invention.
FIGURE 3.- It shows an example of text that includes hidden information and a detail of data containing such hidden information, according to a possible embodiment of the invention.
FIGURE 4.- It shows an example of the use of the method of encoding/decoding information in texts in an instant messaging system, according to a possible embodiment of the invention.

### PREFERRED EMBODIMENT OF THE INVENTION

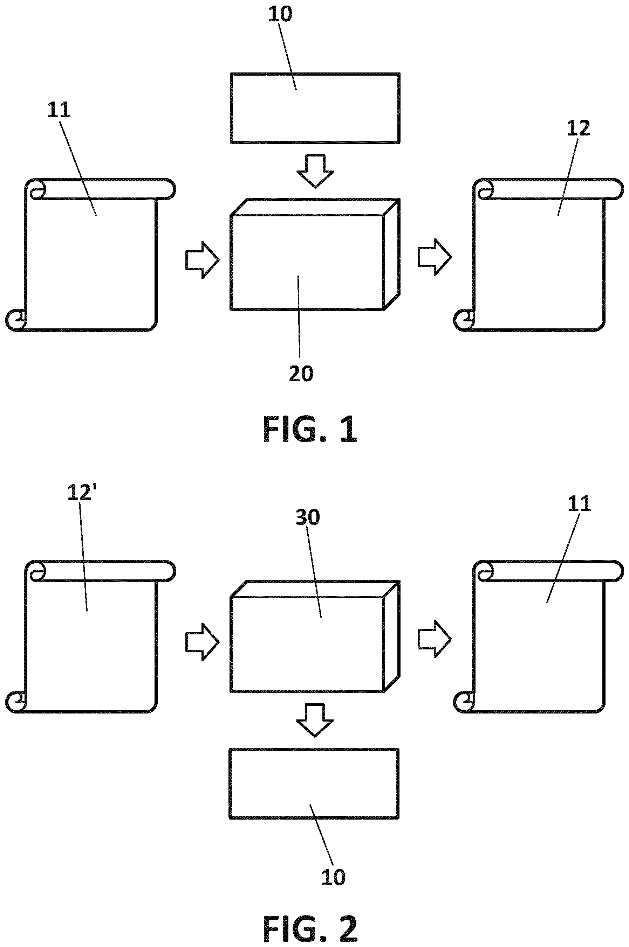

Figure 1 schematically shows the method of encoding that can be implemented in an encoder module (20) that takes an original document or text (11) as input and encodes therein, in a hidden way, information (10) to obtain a text with hidden information (12). The original document (11) can be a digital document or, in some cases, it can be based on a digitized document to arrive at a digital document that is applied as original input text (11). For example, if the text is recoded with a technique such as OCR (Optical Character Recognition) or similar, it is possible to start from a scanned document on a printed paper and use the document with the recoded text as original input text (11). The encoder module (20) encodes the characters of the original input text (11) as such characters and not as images. The text with hidden information (12), which is a digital document, cannot be distinguished in human observation from the original text (11) but includes the information (10) encoded.

The decoding method that can be implemented in a decoder module (30), shown in Figure 2, is the reverse process of the encoding method mentioned above and takes as input a text received with hidden information (12'), text that is in digital format and extracts the information (10) by decoding the received text to obtain the original text (11). Since the encoding and decoding methods work with digital documents, although in the received text with hidden information (12') the font type of the characters, style or type of document (pdf, doc, etc.) can be changed with regard to text with hidden information (12), this does not affect the result.

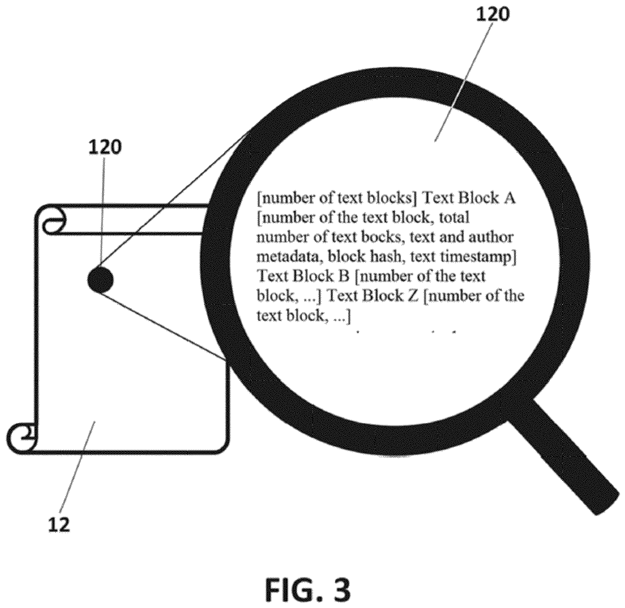

A possible implementation of information encoding (10) to obtain text with hidden information (12) is illustrated in Figure 3. The text (12) is not distinguishable from human observation from the original text (11) but, if an image (120) of the encoded information could be observed in a null-sized space of the text, as shown in Figure 3, it contains the encoded information, for example, having divided the text into a predefined number of blocks and, for each of those blocks, the hidden information comprises the following data: text block number, pre-set block size, text and author metadata, a hash string of previously calculated text, and a timestamp. Note that a space between words can correspond to several null-sized spaces, ZWSP ("zero-width space") and ZWSPs can be between two words, but also between two letters of the same word.

For example, if the objective of the implementation is to eliminate fictitious identities and/or guarantee the authenticity and integrity of the texts transmitted in a messaging system, a possible implementation foresees that the information (10) to be integrated into the aforementioned text can be automatically generated: dividing the text into blocks of pre-established size, calculating the hash of the source text, and concatenating it with information about the author (eventually certified, such as a public key of a certificate) and/or sending timestamp of the original text and/or number of text blocks in the message and its progressive number. Once the information (10) has been generated (or entered manually), it can be encoded using null-sized spaces, ZWSP, and replicated to the message itself before or after each block. This implementation does not require any user interaction.

Encoding the information (10) using null-sized spaces, ZWSP depends on the number of null-sized spaces or ZWSP characters available and the number of characters to be left available for encoding the message (for example, 128 ASCII characters).

In a possible example, where a message consisting of characters from a set of M characters is required to be encoded and where N different ZWSP characters are available in the original text, a number of ZWSP characters is required for encoding equal to the upper integer of the logarithm in M base N For example, for 128 characters to encode, with two different ZWSP characters, 7 null-sized spaces or ZWSP are needed for each character to be encoded. Once this is set, all possible characters to be encoded are sequenced (128 in this example) and each ZWSP character is assigned a value starting with 0 (0 and 1 if two, etc.). And so it is encoded with the corresponding number in base N each character.

The encoded information is integrated into at least one certain part of the original text (11) transforming it into the text with hidden information (12). To integrate the encoded information simply add the ZWSP characters encoding the message in the part of the original text (11) that has been determined as appropriate; for example, at the end of a text block a sequence of ZWSP characters is added encoding the desired message; but, in another example, it is also possible to distribute those ZWSP characters among all the characters in the block. This depends on the implementation preferences, but is transparent to the purpose of the invention.

Similarly, the reception of a message in a system that implements this solution for the reverse decoding process is accompanied by the automatic calculation of the information it should contain (hash of the text block, etc.), extraction of the encoded information in the null-sized spaces and its comparison with the calculated information (for example, the hash of the text block, the number of text blocks, etc.) and verification of the other decoded information (for example, the public key of the author's certificate, the text send stamp, etc.).

Similarly, in another possible implementation example, an intermediate layer can be implemented in a text editor so that the final text includes the encoding of the same information as in the previous example (number of text blocks, size and number of each block, text and author metadata, text hash and timestamp) before the final edited text is saved or published (on a web page, in a pdf file, etc.), with the information hidden in the null-sized spaces included.

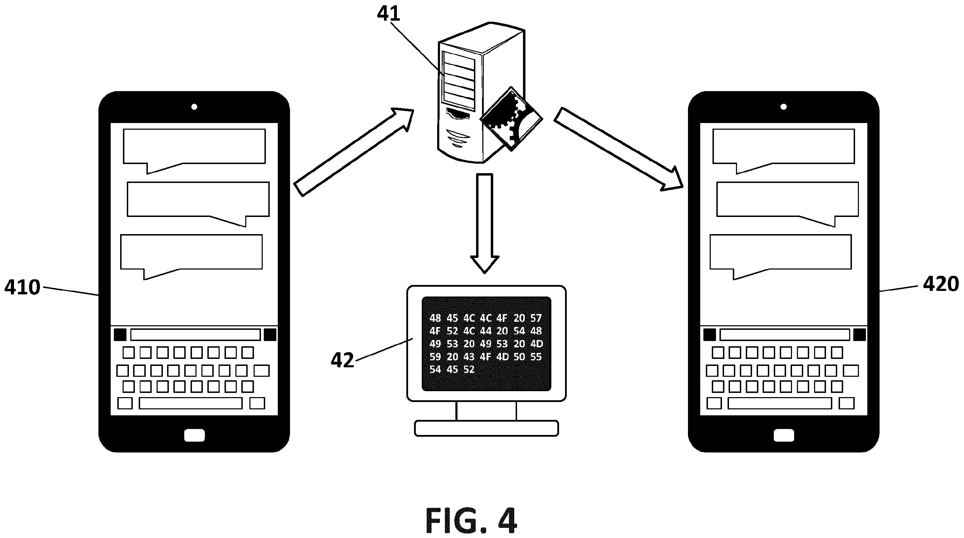

Figure 4 shows a possible way of integrating the solution into an instant messaging system such as a monitoring system (42) comprising the above-mentioned encoder (20) and decoder (30) modules to encode/decode text messages with hidden information as described. The monitoring system (42) can be a third party external to the instant messaging conversation provided by a remote server (41) between a User A or first member (410) and a User B or second member (420), as shown in Figure 4, or the monitoring system (42) is a third member of that conversation, performing a monitoring function of messages between the first member (410) and second member (420).

The monitoring system (42), if external, only needs to decode (to verify hidden information or detect hidden requests for help, for example), and in that case it is the users' own terminals that encode, in an intermediate layer transparent to the user as in the case of the text editor. However, as described below, in the case that the monitoring system (42) is integrated into the messaging system, in the users' own terminals, the monitoring system (42) integrates both encoding and decoding.

In a possible implementation of the invention, the monitoring system (42) with the encoder modules (20) and decoder (30) consists of a software agent integrated into the messaging system itself, both in the end user terminal A or B (410, 420), as in the remote server (41) of the messaging service. This agent is responsible for implementing the following functionalities:
1. Collecting system parameters (and set default values for them if they are not specified by the end user). These parameters include, for example, the sizes of text blocks for hash calculation, the frequency with which a message is repeated integration into the text throughout the text, etc.
2. Identification and encoding (and eventual encryption) of the message to be integrated into the text, as well as its integration into it, by the encoder module (20).
3. Identification of any messages encoded in received messages, their eventual decryption and decoding by the decoder module (30). Eventually, the hidden information that includes the text is also verified (e.g. block hash), and/or a visualization is provided to the end user of the extracted information once decoded (e.g. message integrity verified, author verified, etc.).

Not all steps are necessary in each implementation, but depend on the specific application that is intended to be developed.

For example, if it is intended to develop an integration of the solution in a messaging system of an anti-bullying help request service, it is not necessary to divide the text into blocks, nor calculate text hash strings ("hashes"), but rather a specific pre-set help message is encoded at the beginning of each message sent by the user requesting the anti-bullying help request. Likewise, it is not necessary to identify any messages encoded in the received messages, since the requests are deleted by the remote server (41) of the service, which is the only element of the system that will receive such requests. Therefore, the solution results in a simplified monitoring system (42) with only the following functionalities:
1. Preset user interaction with the service to include help request (e.g., (a) using a specific keyboard layout, with the same characters as the usual one, but encoding a help message with ZWSP after each character, Or (b) encodes a character not normally used in a request for help in ZWSPs, for example the character "ç" in English, or (c) the inclusion of a preset and unusual word in a message, That the user knows and that it will not result in the text encoded in the messaging system, but in a request for help in ZWSPs, for example "bajativo" or "botijo" in Spanish)
2. Encoding help request in the following N messages sent by the agent with the encoder module (20) integrated into the messaging system. The repetition of the help request or petition for a number of times adds robustness to the system itself. The N number of requests is a parameter configured by the system administrator based on the desired robustness.
3. Identification and decoding of the request by the central server of the service comprising the decoder module (30) and warning to the control user.
4. Deleting help request in the message and forwarding it to the target user/group.

As described, one implementation is not incompatible with the other. For example, a messaging system can be implemented that provides for the help request by the end user, as well as guaranteeing the authenticity and integrity of the texts transmitted and the identity of their authors. In this case, the different messages encoded in null-sized spaces are concatenated in a preset order, for example, always present in the same position of the text (for example, at the beginning of the text), or encoded in different positions of the text (for example, help requests at the beginning of the text and text metadata at the end of each block of text).

## Claims

1. A method of encoding information (10) into an original text (11), comprising the following steps:
- obtaining information (10) and encoding it using null-sized spaces from the original text (11),
- determining at least one part of the original text (11) to integrate the information (10) encoded into the, at least one, determined part of the original text (11) transforming it into a text with hidden information (12), wherein integrating the encoded (10) information consists in adding the null-sized spaces used for encoding.

2. The method according to claim 1, **characterized in that** it is performed by an encoder module (20) implemented in a processor receiving the original text (11).

3. The method according to claim 2, **characterized in that** the encoder module (20) is a software agent.

4. The method according to claim 3, **characterized in that** the encoder module (20) is a software agent integrated at least partly in a remote server (41) of a messaging service.

5. The method according to claim 4, **characterized in that** the software agent of the encoder module (20) has a part integrated in an end user terminal (410, 420) of the messaging service.

6. The method according to claim 3, **characterized in that** the encoder module (20) is a software agent integrated in a text editor.

7. The method according to any of claims 2-6, **characterized in that** obtaining the information (10) comprises manually entering the information (10) i into the encoder module (20).

8. The method according to any of claims 2-6, **characterized in that** obtaining the information (10) comprises automatically generating the information (10) by the encoder module (20).

9. The method according to claim 8, **characterized in that** generating information (10) comprises dividing, by the encoder module (20), the original text (11) into a number of blocks of pre-established size and numbering each block, and **in that** the generated information (10) includes the number of blocks, the numbering of each block and the size of each block.

10. The method according to any of claims 8-9, **characterized in that** generating information (10) comprises calculating, by the encoder module (20), by means of a hash function, a hash string from the original text (11) and **in that** the generated information (10) comprises the hash string.

11. The method according to any of claims 8-10, **characterized in that** the information (10) generated comprises metadata of the original text (11) and/or an author of the original text (11).

12. The method according to any claims 10 and 11, **characterized in that** the information (10) generated comprises the hash string concatenated with at least part of the metadata.

13. The method according to any of claims 8-10, **characterized in that** the information (10) generated comprises a time stamp indicating a time of reception of the original text (11) in the encoder module (20).

14. The method according to any of the above claims, **characterized in that** to encode the information (10) obtained comprising a message consisting of text characters from a set of M characters and having N null-sized spaces available in the original text (11), a number of null-sized spaces is used for encoding equal to the upper integer of the logarithm in base N of M.

15. A method of decoding information (10) from a text received with hidden information (12'), **characterized in that** it comprises the following steps:
- identifying, detecting null-sized spaces, at least part of the received text (12') containing the information (10),
- decoding the information (10) using the detected null-sized spaces and extracting it from the received text (12') to obtain an original text (11).

16. The method according to claim 15, **characterized by** further comprising verifying the information (10) by comparing the information (10) decoded with a reference generated information.

17. The method according to any claims 15-16, **characterized by** further comprising providing a visualization of the information (10) decoded to an end user.

18. The method according to claim any claims 15-17, **characterized in that** it is performed by a decoder module (30) implemented in a processor receiving text with hidden information (12').

19. The method according to claim 18, **characterized in that** the decoder module (30) is a software agent.

20. The method according to claim 19, **characterized in that** the decoder module (30) is a software agent integrated at least partly in a remote server (41) of a messaging service.

21. The method according to claim 20, **characterized in that** the software agent of the decoder module (30) has a part integrated in an end user terminal (410, 420) of the messaging service.

22. The method according to claim 19, **characterized in that** the decoder module (30) is a software agent integrated in a text editor.

23. The method according to any of claims 18-22, **characterized in that** the decoder module (30) verifies the information (10) by comparing the information (10) decoded with a reference information generated by the decoder module (30), the reference information generated comprising at least one of the following data: i) a hash string of the received text (12') calculated by the decoder module (30) by means of a hash function; ii) a time stamp indicating a time of receipt of the received text (12') in the decoder module (30); and iii) metadata of the received text (12') and/or an author of the received text (12').

24. The method according to any of claims 15-23, **characterized in that** for decoding information (10), comprising a message consisting of text characters from a set of M characters, a number of detected null-sized spaces equal to the top integer of the N-base logarithm of M is used, wherein N is the number of null-sized spaces available in the original text (11).

25. A text monitoring system (42), **characterized by** comprising a decoder module (30) configured to perform the steps of the defined method according to claims 15-24.

26. The text monitoring system (42) according to claim 25, **characterized by** further comprising an encoder module (20) configured to perform the steps of the defined method according to claims 1-14.

27. The text monitoring system (42) according to claim 26, **characterized in that it** is integrated into a remote server (41) of a messaging service.

28. A computer program implementing the method of encoding the information defined according to claims 1-14.

29. A computer program implementing the method of decoding the information defined according to claims 15-24.
